# EUROPÄISCHE PATENTSCHRIFT

(11) **EP 0 692 324 B1**
(45) Veröffentlichungstag und Bekanntmachung des Hinweises auf die Patenterteilung: **07.04.1999**
(21) Anmeldenummer: 95110790.3
(22) Anmeldetag: 11.07.1995
(51) Int. Cl.: B21D 39/03, F01N 7/14, B60R 13/08

(54) **Verfahren zur Befestigung von teilweise isolierten Wärmeabschirmblechen und Hitzeschild mit daran befestigtem Wärmeabschirmblech**
Method for attaching a partially insulated heat screening sheet and heat shield having an insulated heat screen attached thereto
Procédé de montage d'une tôle de blindage thermiquement isolée partiellement et écran de protection thermique avec tôle de blindage thermiquement isolée attachée à celui-ci

(30) Priorität: 13.07.1994 DE 4424099
(43) Veröffentlichungstag der Anmeldung: 17.01.1996
(73) Patentinhaber: Pirchl, Gerhard, 5708 Birrwil (CH)
(72) Erfinder: Pirchl, Gerhard, 5708 Birrwil (CH)
(74) Vertreter: Riebling, Peter, Dr.-Ing.

(56) Entgegenhaltungen:
- EP-A- 0 374 603
- EP-A- 0 458 049
- DE-U- 9 010 136
- US-A- 2 747 642
- US-A- 3 310 861

## Beschreibung

Die Erfindung betrifft ein Verfahren zur Befestigung von teilweise isolierten Wärmeabschirmblechen an einem Hitzeschild nach dem Oberbegriff des Patentanspruchs 1 und ein Hitzeschild mit daran befestigtem Wärmeabschirmblech nach dem Oberbegriff des Patentanspruchs 5. Derartige Wärmeabschirmbleche werden verwendet zur Hitzeabschirmung von Kfz.-Teilen, wie z.B. Katalysatoren, Auspufftöpfen und dergleichen gegenüber wärmeempfindlichen Kfz.-Teilen, wie z.B. im Kfz.-Boden oder dergleichen.

Bisher ist es lediglich bekannt, ein Metallfolienpaket, welches aus mehreren paketweise übereinander gestapelten genoppten Folien besteht, über ein Klebeverfahren an einem zugeordneten Hitzeschild zu befestigen. Es handelt sich also darum, daß bisher die sogenannte Abschirmmatte über ein Klebeverfahren am Hitzeschild befestigt wurde.

Nachdem derartige Kleber nur schwer zu beherrschen sind, und die Gefahr besteht, daß sich die Abschirmmatte im Klebebereich von dem Hitzeschild löst, ist es ferner bekannt, ein Deckblech zu verwenden, welches über die Abschirmmatte gelegt wird und welches mit dem Hitzeschild über eine Verbördelung verbunden wird.

Die Verwendung eines zusätzlichen Deckbleches erhöht aber die Aufbauhöhe dieses Isolierteiles und erhöht im übrigen auch die Herstellungskosten.

Der Erfindung liegt deshalb die Aufgabe zugrunde, bei einem Hitzeschild, welches lediglich partiell über eine Abschirmmatte abgeschirmt werden soll, eine günstige und betriebssichere Verbindung zwischen der Abschirmmatte und dem Hitzeschild zu schaffen.

Zur Lösung der gestellten Aufgabe schlägt die Erfindung ein Verfahren gemäß dem Patentanspruch 1 und ein Hitzeschild gemäß dem Patentanspruch 5 vor. Vorteilhafte Weiterbildungen der Erfindung sind in den Unteransprüchen definiert.

Wesentliches Merkmal der Erfindung ist, daß die Abschirmmatte nun randseitig über eine in dem Hitzeschild angeordnete Klemmrille eingeklemmt wird, welche Klemmrille einen Klemmspalt für mindestens die Deckfolie der Abschirmmatte bildet.

Damit besteht der wesentliche Vorteil, daß nun nicht mehr bei einer partiellen Abschirmung eines Hitzeschildes mit einer Abschirmmatte mit einem Kleber gearbeitet werden muß und es bedarf auch keines Deckbleches mehr. Es wird stattdessen eine rein mechanische Verbindung zwischen der Abschirmmatte und dem Hitzeschild vorgeschlagen, die im wesentlichen aus einer Klemmrille besteht.

Es wird also im Bereich des ggf. dreidimensional gebogenen Hitzeschildes (welches z.B. U-förmig gebogen ist) eine Klemmrille erzeugt, die durch einen Stauch- oder Biegevorgang in dem Blechmaterial des Hitzeschildes erreicht wird. Diese Klemmrille ist zunächst offen. In diese nach oben offene Klemmrille wird mindestens der Folienrand der obersten Folie der Abschirmmatte eingeführt und danach wird die Klemmrille geschlossen, so daß sich ein Klemmspalt ergibt, der etwa in der Ebene des Blechmaterials des Hitzeschildes ist.

Zur Verbesserung der Aufbauhöhe kann es dann in einer weiteren Ausgestaltung der Erfindung vorgesehen sein, daß die sich ergebende Rille, welche mit ihrem Klemmspalt den Folienrand einklemmt, noch umgelegt wird, um die Aufbauhöhe zu vermindern. Dies ist jedoch nicht lösungsnotwendig, wird aber in einer bevorzugten Ausgestaltung bevorzugt.

Mit dieser rein mechanischen Verbindung zwischen einer Abschirmung ist es erstmals möglich, eine teilweise Isolierung eines Hitzeschildes zu schaffen, wobei in beliebigen Bereichen des Hitzeschildes eine derartige Abschirmmatte über die vorher erwähnte Klemmrille befestigt werden kann.

Es kann daher auf den Kleber verzichtet werden und ebenso auf ein Deckblech, welches zur Halterung der Abschirmmatte vorher notwendig war.

In einer bevorzugten Ausgestaltung der vorliegenden Erfindung ist es vorgesehen, daß das Folienpaket mit seiner Deckfolie ringsumlaufend in einer derartigen Klemmrille eingefasst und luftdicht abgeschlossen wird, so daß also ein ringsum laufender Klemmverbund zwischen der Deckfolie der Abschirmmatte und den zugeordneten Flächen des Hitzeschildes erfolgt.

Die Klemmrille wird durch Tiefziehen des Hitzeschildes an den entsprechenden Befestigungsbereichen erreicht, wobei nicht notwendigerweise eine rundprofilierte Klemmrille erzeugt werden muß, sondern es kann auch eine trapezförmig oder anders profilierte Klemmrille erzeugt werden.

Im folgenden wird die Erfindung anhand von lediglich einen Ausführungsweg darstellenden Zeichnungen näher erläutert. Hierbei gehen aus den Zeichnungen und ihrer Beschreibung weitere bevorzugte Merkmale und Vorteile der Erfindung hervor.

Es zeigen:

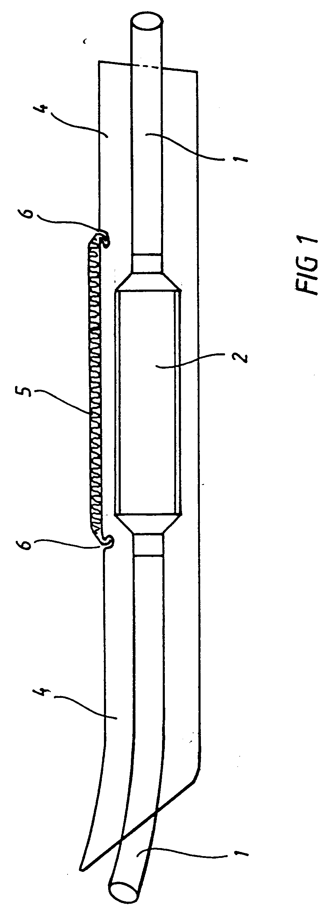

- Figur 1:: schematisiert in Seitenansicht ein Hitzeschild nach der Erfindung,
- Figur 2:: das Hitzeschild mit geöffneter Klemmrille in einem ersten Verfahrenszustand,
- Figur 3:: das Hitzeschild nach Figur 2 in einem zweiten Verfahrenszustand,
- Figur 4:: das Hitzeschild in einem dritten Verfahrenszustand,
- Figur 5:: das Hitzeschild in einem sechsten Verfahrenszustand,
- Figur 6:: zweite Ausbildung der Klemmrille.

Gemäss den vorliegenden Zeichnungen besteht das Hitzeschild 4 aus einem etwa U-förmig gebogenen Blechteil, welches einen Auspuffteil eines Kfz. nach oben hin abschirmen soll. Das Auspuffteil besteht aus einem Auspuffrohr 1, welches in einen Katalysator 2 übergeht, von dem aus wiederum ein weiteres Auspuffrohr 1 sich nach hinten erstreckt.

Zur Abschirmung soll ein Hitzeschild 4 verwendet werden, welches etwa U-förmig die genannten Teile 1,2 umgibt, und welches nur lediglich dem Katalysator 2 gegenüberliegend eine verbesserte Abschirmung gegenüber dem Kfz.-Boden aufweisen soll. Hierzu wird eine Abschirmmatte 5 verwendet, die in einer speziellen patentgemässen Befestigung mit dem Hitzeschild 4 verbunden ist.

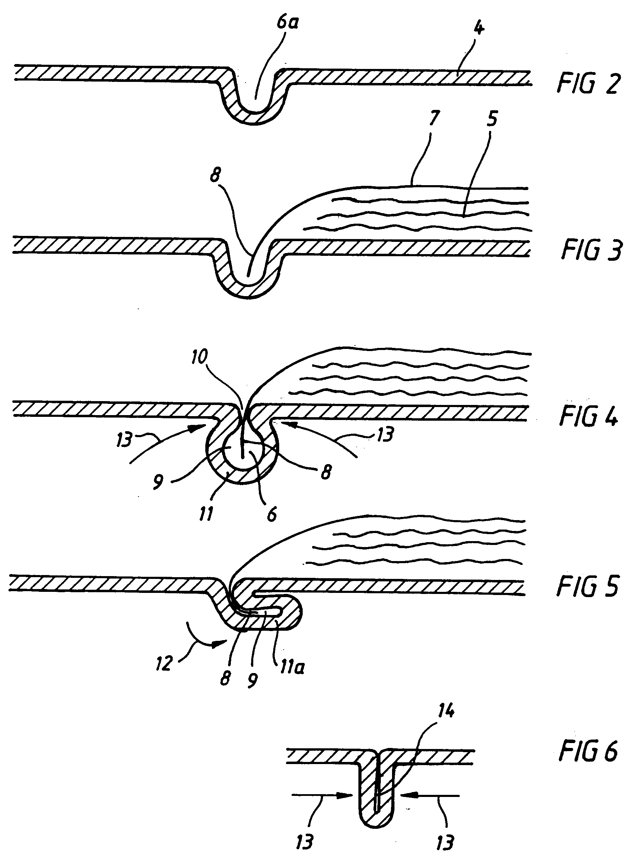

Gemäss Figur 2 wird zunächst in dem Blechmaterial des Hitzeschildes 4 eine nach oben geöffnete Klemmrille 6a durch Tiefziehen eingearbeitet. In dieser nach oben geöffnete Klemmrille 6a wird nun der Folienrand 8 einer Deckfolie 7 eingeführt, wonach dann die Klemmrille 6 geschlossen werden kann (Figuren 3,4).

Wichtig ist, daß die Klemmrille 6 seitlich geschlossen ist, um so einen völlig dichten Klemmverbund zwischen dem Hitzeschild und dem zugeordneten Folienrand 8 zu schaffen.

Es wird also ein etwa rillenförmiger Aufnahmeraum 9 zur Halterung des Folienrandes 8 geschaffen und der Aufnahmeraum 9 wird nach oben durch einen Klemmspalt 10 begrenzt, der dann mit Hilfe eines entsprechenden Klemmwerkzeuges zusammengeführt wird und so den Folienrand 8 der Deckfolie 7 einklemmt.

Mit dem Verfahrensstand nach Figur 4 könnte eigentlich der Herstellungsprozess beendet sein.

In einer Weiterbildung der vorliegenden Erfindung wird es jedoch bevorzugt, wenn die Klemmrille möglichst klein in der Bauhöhe ausgebildet wird. Daher ist es nach Figur 5 vorgesehen, daß die Rille 11 in Pfeilrichtung 12 umgelegt wird, um einen möglichst kleinen Aufbau zu erzielen.

Es ist selbstverständlich möglich, in den Aufnahmeraum 9 der Klemmrille 6 noch zusätzlich einen Kleber einzubringen, um noch eine zusätzliche Haftung des Folienrandes 8 im Aufnahmeraum 9 zu gewährleisten.

Dies ist jedoch nicht lösungsnotwendig, weil die Halterungswirkung allein schon durch den Klemmspalt 10 erreicht wird.

Selbstverständlich ist es nicht lösungsnotwendig, die Länge der Klemmrille 6 über das gesamte Hitzeschild 4 zu erstrecken; es ist auch möglich, die Klemmrille nur partiell in der Länge zu gestalten, oder mit einem Bördelflansch zu kombinieren, wobei in den umgeklemmten kombinieren, wobei in den ungeklemmten Bereichen die Deckfolie auf dem Material des Hitzeschildes z.B. angeklebt werden kann.

D.h. also, in einem Teilbereich des Hitzeschildes könnte die ansich bekannte Bördeltechnik zur Halterung der Deckfolie verwendet werden, während in den übrigen Bereichen des Hitzeschildes die hier vorgestellte patentgemässe Lösung verwirklicht wird.

Die Figur 4 zeigt im übrigen noch, wie die Klemmkraft in Pfeilrichtung 13 auf den Klemmspalt 10 wirkt, um die notwendige Einklemmkraft für den Folienrand 9 zu verwirklichen.

Die Figur 6 zeigt als weiteres Ausführungsbeispiel eine Ausführung, bei der ein gerader, etwa flächenförmiger Klemmspalt 14 erzeugt wird. Hier wird also nicht partiell, wie in Figur 4 gezeigt, in Pfeilrichtung 13 geklemmt, sondern in Figur 6 wird flächenförmig gemäss der Pfeilrichtung 13 geklemmt, um einen geraden, sich über eine relativ große Länge erstreckenden Klemmspalt 14 zu erzeugen.

Mit der vorliegenden Erfindung ist es damit erstmals möglich, eine günstige und betriebssichere Verbindung zwischen einer Abschirmmatte und einem Hitzeschild zu schaffen.

### Zeichnungs-Legende

- 1: Auspuffrohr
- 2: Katalysator
- 3:
- 4: Hitzeschild
- 5: Abschirmmatte
- 6: Klemmrille 6a
- 7: Deckfolie
- 8: Folienrand
- 9: Aufnahmenraum
- 10: Klemmspalt
- 11: Rille 11a
- 12: Pfeilrichtung
- 13: Pfeilrichtung
- 14: Klemmspalt

## Patentansprüche

1. Verfahren zur Befestigung von teilweise isolierten Wärmeabschirmblechen an einem Hitzeschild (4), wobei die Wärmeabschirmbleche bevorzugt als Abschirmmatten (5) in Form von Folienstapeln ausgebildet sind, **dadurch gekennzeichnet,** daß im Hitzeschild (4) eine Klemmrille (6,6a) gebildet wird, mindestens die Deckfolie (7) der Abschirmmatte (5) in die Klemmrille (6,6a) eingeführt wird, die Klemmrille (6,6a) mit der oder den eingefügten Folien (7) so verpresst wird, daß ein Klemmspalt (10,14) gebildet wird, und die Folien (7) im Klemmspalt (10,14) gehalten werden.

2. Verfahren nach Anspruch 1, **dadurch gekennzeichnet**, daß die Klemmrille (6,6a) über ihre ganze Höhe oder nur im Bereich der Oberfläche des Hitzeschildes (4) verpresst wird.

3. Verfahren nach Anspruch 1 oder 2, **dadurch gekennzeichnet**, daß die Klemmrille (6,6a) nach dem Verpressen derselben umgebördelt wird.

4. Verfahren nach einem der Ansprüche 1 bis 3, **dadurch gekennzeichnet**, daß die Klemmrille (6,6a) bzw. der Klemmspalt (10,14) über den ganzen Umfang der Abschirmmatte (5) oder nur einen Teil desselben angebracht werden.

5. Hitzeschild (4) mit daran befestigtem Wärmeabschirmblech, wobei das Wärmeabschirmblech bevorzugt als Abschirmmatte in Form eines Folienstapels ausgebildet ist, **dadurch gekennzeichnet**, daß zumindest die Deckfolie (7) der Abschirmmatte (5) in einem aus einer im Hitzeschild gebildeten Klemmrille (6,6a) entstandenen Klemmspalt (10,14) gehalten ist.

6. Hitzeschild nach Anspruch 5, **dadurch gekennzeichnet**, daß der Klemmspalt (10,14) über die gesamte Höhe der Klemmrille (6,6a) oder nur einen Teil dieser Höhe ausgebildet ist.

7. Hitzeschild nach Anspruch 5 oder 6, **dadurch gekennzeichnet**, daß die Klemmrille (6,6a) nach dem Verpressen zum Klemmspalt (10,14) umgebördelt ist.

8. Hitzeschild nach einem der Ansprüche 5 - 7, **dadurch gekennzeichnet**, daß die Klemmrille (6,6a) bzw. der Klemmspalt (10,14) über den gesamten Umfang der Abschirmmatte (5) oder nur einen Teil desselben verlaufen.

## Claims

1. A method for the fastening of partially insulated heat screening plates to a heat shield (4), wherein the heat screening plates are constructed as screening mats (5) in the form of foil stacks, characterised in that in the heat shield (4) a clamping groove (6, 6a) is formed, at least the cover foil (7) of the screening mat (5) is introduced into the clamping groove (6, 6a), the clamping groove (6, 6a) is pressed with the inserted foil or foils (7) so that a clamping gap (10, 14) is formed, and the foils (7) are held in the clamping gap (10, 14).

2. The method according to Claim 1, characterised in that the clamping groove (6, 6a) is pressed over its entire height or only in the region of the surface of the heat shield (4).

3. The method according to Claim 1 or 2, characterised in that the clamping groove (6, 6a), after the pressing thereof, is flanged.

4. The method according to any one of Claims 1 to 3, characterised in that the clamping groove (6, 6a) or the clamping gap (10, 14) are applied over the entire periphery of the screening mat (5) or only a part thereof.

5. A heat shield (4) with heat screening plate fastened thereon, wherein the heat screening plate is constructed as a screening mat (5) in the form of a foil stack, characterised in that at least the Cover foil (7) of the screening mat (5) is held in a clamping gap (10, 14) resulting from a clamping groove (6, 6a) formed in the heat shield.

6. The heat shield according to Claim 5, characterised in that the clamping gap (10, 14) is constructed over the entire height of the clamping groove (6, 6a) or only a part of this height.

7. The heat shield according to Claim 5 or 6, characterised in that the clamping groove (6, 6a) is flanged after pressing to the clamping gap (10, 14).

8. The heat shield according to any one of Claims 5 - 7, characterised in that the clamping groove (6, 6a) or the clamping gap (10, 14) run over the entire periphery of the screening mat (5) or only a part thereof.

## Revendications

1. Procédé pour fixer des tôles calorifuges partiellement isolées à un écran thermique (4), les tôles calorifuges étant conçues comme des mats calorifuges (5) en forme de piles de feuilles, caractérisé en ce qu'on forme une rainure de serrage (6, 6a) dans l'écran thermique (4), on introduit au moins la feuille de recouvrement (7) du mat calorifuge (5) dans la rainure de serrage (6, 6a), et on comprime la rainure de serrage (6, 6a) avec la ou les feuilles (7) insérées, de telle sorte qu'il se forme un interstice de serrage (10, 14) et que les feuilles (7) soient retenues dans l'interstice de serrage (10, 14).

2. Procédé selon la revendication 1, caractérisé en ce que la rainure de serrage (6, 6a) est comprimée sur toute sa hauteur ou seulement dans la zone de la surface de l'écran thermique (4).

3. Procédé selon la revendication 1 ou 2, caractérisé en ce que la rainure de serrage (6, 6a), après avoir être comprimée, est repliée.

4. Procédé selon l'une des revendications 1 à 3, caractérisé en ce que la rainure de serrage (6, 6a) et l'interstice de serrage (10, 14) sont prévus sur toute la circonférence du mat calorifuge (5) ou sur une partie seulement de celle-ci.

5. Ecran thermique (4) sur lequel est fixée une tôle calorifuge, la tôle calorifuge étant conçue comme un mat calorifuge (5) en forme de pile de feuilles, caractérisé en ce que la feuille de recouvrement (7), au moins, du mat calorifuge (5) est retenue dans un interstice (10, 14) résultant d'une rainure de serrage (6, 6a) formée dans l'écran thermique.

6. Ecran thermique selon la revendication 5, caractérisé en ce que l'interstice de serrage (10, 14) est formé sur toute la hauteur de la rainure de serrage (6, 6a) ou sur une partie seulement de cette hauteur.

7. Ecran thermique selon la revendication 5 ou 6, caractérisé en ce que la rainure de serrage (6, 6a), après avoir été comprimée pour former l'interstice de serrage (10, 14), est repliée.

8. Ecran thermique selon l'une des revendications 5 à 7, caractérisé en ce que la rainure de serrage (6, 6a) et l'interstice de serrage (10, 14) s'étendent sur toute la circonférence du mat calorifuge (5) ou sur une partie seulement de celle-ci.
